# EUROPÄISCHE PATENTSCHRIFT

(11) **EP 4 549 771 B1**
(45) Veröffentlichungstag und Bekanntmachung des Hinweises auf die Patenterteilung: **30.07.2025**
(21) Anmeldenummer: 23207523.4
(22) Anmeldetag: 02.11.2023
(51) Int. Cl.: F16D 59/02, F16D 65/18

(54) **ELEKTROMAGNETISCH BETÄTIGBARE FEDERKRAFTBREMSE SOWIE VERFAHREN ZU DEREN HERSTELLUNG**
ELECTROMAGNETICALLY ACTUATED SPRING-APPLIED BRAKE AND METHOD FOR ITS MANUFACTURE
FREIN À RESSORT À ACTIONNEMENT ÉLECTROMAGNÉTIQUE ET SON PROCÉDÉ DE FABRICATION

(43) Veröffentlichungstag der Anmeldung: 07.05.2025
(73) Patentinhaber: KEB Automation KG, 32683 Barntrup (DE)
(72) Erfinder: Willer, Helmut, 32760 Detmold (DE); Schwedt, Jannis-Martin, 32683 Barntrup (DE)
(74) Vertreter: Brinkmann & Partner

(56) Entgegenhaltungen:
- EP-A1- 4 184 032
- DE-A1- 102015 215 835
- DE-B3- 102013 219 878

## Beschreibung

Die Erfindung betrifft eine elektromagnetisch betätigbare Federkraftbremse, mit einer auf einer Welle verdrehfest, gleichwohl aber axial verschieblich anordbaren Bremsscheibe, einem Elektromagneten, der ein Magnetgehäuse und eine davon aufgenommene Spule aufweist, einer zwischen der Bremsscheibe und dem Magnetgehäuse axial verschieblich angeordneten Ankerplatte und einem Flansch, der mittels eines Verbindungselements am Magnetgehäuse verdrehfest angeordnet ist, wobei die Bremsscheibe und die Ankerplatte zwischen dem Flansch und dem Magnetgehäuse angeordnet sind. Ferner betrifft die Erfindung ein Verfahren zur Herstellung einer elektromagnetisch betätigbaren Federkraftbremse.

Elektromagnetisch betätigbare Federkraftbremsen sind aus dem Stand der Technik an sich bekannt, weshalb es eines gesonderten druckschriftlichen Nachweises an dieser Stelle nicht bedarf. Es sei deshalb auch nur beispielhaft auf die EP 4 184 032 A1 verwiesen, die eine gattungsgemäße Federkraftbremse offenbart.

Bei Federkraftbremsen der gattungsgemäßen Art ist es per se angestrebt, die axiale Beabstandung zwischen Ankerplatte einerseits und Magnetgehäuse andererseits, den sogenannten Luftspalt, für eine im Weiteren optimierte Verwendung der Federkraftbremse präzise ausbilden und/oder einstellen zu können. Dabei besteht ein grundsätzliches Problem darin, dass die einzelnen Baukomponenten der Federkraftbremse, insbesondere der Flansch, die Bremsscheibe und die Ankerplatte, herstellungsbedingt hinsichtlich ihrer jeweiligen geometrischen Abmessungen Toleranzen aufweisen, die sich hinsichtlich des im endmontierten Zustand zwischen Magnetgehäuse und Ankerplatte befindlichen Luftspalts ungünstig aufsummieren können. Dies kann in nachteiliger Weise sowohl bei einem zu großen Luftspalt als auch bei einem zu kleinen Luftspalt dazu führen, dass ein bestimmungsgemäßer Betrieb der Federkraftbremse nicht möglich ist.

Um dieser Problematik zu begegnen, ist es aus dem Stand der Technik bekannt, zur beabstandeten Anordnung von Flansch und Magnetgehäuse plastisch verformbare Distanzbuchsen einzusetzen. Eine solche Konstruktion offenbart beispielsweise die DE 10 2013 219 878 B3.

Die gemäß der DE 10 2013 219 878 B3 vorgesehenen Distanzbuchsen weisen jeweils einen Abschnitt auf, der eine plastische Verformung zulässt. Während der Montage einer Federkraftbremse, kommt es infolge einer Einstellung eines gewünschten Luftspalts zu einer plastischen Verformung der Distanzbuchsen durch Verkürzung. Diese Verkürzung wird mittels eines Wegsensors überwacht, was eine zu große Verkürzung der Distanzbuchsen und eine damit einhergehende Ausgestaltung eines zu klein bemessenen Luftspalts vermeiden soll. Von Nachteil dieser Konstruktion ist insbesondere der apparative Aufwand für eine bestimmungsgemäße Montage bzw. die aufwändige Montage als solche, da sie zeitaufwändig und damit teuer ist.

Aus dem Stand der Technik ist es beispielsweise gemäß der EP 3 947 062 B1 ferner bekannt, unter Zuhilfenahme von temporär verwendeten Abstandshaltern, wie z. B. Lehren, eine Vormontage einer Federkraftbremse vorzunehmen. Dabei sorgen die temporär verwendeten Abstandshalter für die Ausbildung eines gewünschten Luftspalts. In dieser vormontierten Stellung werden der Flansch und das Magnetgehäuse miteinander verschweißt, sodass eine dauerhafte Positionsausrichtung des Flansches gegenüber dem Magnetgehäuse sichergestellt ist. Alsdann können die temporären Abstandshalter wieder entfernt werden und die so hergestellte Federkraftbremse ist alsdann in bestimmungsgemäßer Weise einsatzbereit. Von Nachteil dieser Ausgestaltung ist insbesondere der apparative Aufwand für eine bestimmungsgemäße Montage. Von Nachteil ist des Weiteren die mangelnde Möglichkeit einer späteren Demontage, insbesondere zu Reparaturzwecken. Auch das Verschweißen von Flansch und Magnetgehäuse ist vergleichsweise aufwändig und bedarf der Bereitstellung einer entsprechenden Schweißeinrichtung.

Aus der DE102015215835A1 ist eine Drehverbindung mit einem einen Magneten enthaltenden Walzlager dargestellt, wobei die Ankerplatte ist über Verbindungselemente mit dem inneren Lagerring verbunden.

Es ist ausgehend vom vorbeschriebenen Stand der Technik die der Erfindung zugrundeliegende **Aufgabe,** eine Federkraftbremse der eingangs genannten Art vorzuschlagen, die konstruktiv dahingehend weiterentwickelt ist, dass bei gleichzeitig einfacher Montage eine optimierte Einstellung eines wunschgemäßen Luftspalts ermöglicht ist. Des Weiteren soll ein Verfahren zur Herstellung einer solchen Federkraftbremse vorgeschlagen werden.

Vorrichtungsseitig, gemäß Anspruch 1, wird zur **Lösung** dieser Aufgabe eine Federkraftbremse der eingangs genannten Art vorgeschlagen, die sich dadurch auszeichnet, dass das Verbindungselement in ein korrespondierend zum Verbindungselement ausgebildetes Gegenstück eingreift, das in ein vom Magnetgehäuse bereitgestelltes Sackloch eingepresst ist, wobei die dem Magnetgehäuse zugewandte Randkante des Gegenstücks unter Belassung eines ein Restvolumen aufweisenden Spaltraums beabstandet zum Grund des Sacklochs angeordnet ist.

Verfahrensseitig, gemäß Anspruch 10, wird zur **Lösung** vorgeschlagen ein Verfahren zur Herstellung einer elektromagnetisch betätigbaren Federkraftbremse der erfindungsgemäßen Art, dadurch gekennzeichnet, dass das Magnetgehäuse in einer Haltevorrichtung fixiert wird, dass die Bremsscheibe unter Zwischenordnung der Ankerplatte am Magnetgehäuse angeordnet wird und dass das Gegenstück mittels eines Pressstempels in das Sackloch eingepresst wird, wobei der Pressstempel mit einem ersten Abschnitt mit dem Gegenstück und mit einem zweiten Abschnitt mit der Bremsscheibe zusammenwirkt, wobei der zweite Abschnitt magnetgehäuseseitig axial über den ersten Abschnitt hinaus vorsteht und wobei der Pressstempel bis auf Anschlag der Ankerplatte am Magnetgehäuse in Richtung auf das Magnetgehäuse verfahren wird.

Zur Anordnung des Flansches am Magnetgehäuse dient ein Verbindungselement. Dieses greift im endmontierten Zustand in ein Gegenstück ein, das vom Magnetgehäuse bereitgestellt ist. Dabei ist das Gegenstück in ein vom Magnetgehäuse bereitgestelltes Sackloch eingepresst. Damit stützt sich das Verbindungselement im endmontierten Zustand unter Zwischenordnung des Gegenstücks am Magnetgehäuse ab.

Die im endmontierten Zustand ausgebildete Verbindung zwischen Verbindungselement und Gegenstück ist bevorzugterweise lösbar ausgebildet. Es ist deshalb bevorzugt, dass das Verbindungselement ein Gewinde trägt. Das Gegenstück ist korrespondierend zum Verbindungselement ausgebildet und verfügt deshalb in diesem Fall über eine Gewindegegenkontur bzw. wird im Erstmontagefall mit einer entsprechenden Gewindegegenkontur ausgerüstet. Als gewindetragendes Verbindungselement kommt bevorzugterweise eine Schraube zum Einsatz, insbesondere eine selbstfurchende bzw. selbstschneidende Schraube. Das im endmontierten Zustand vom Gegenstück bereitgestellte Gewinde wird mithin bei dem Einsatz einer selbstfurchenden bzw. selbstschneidenden Schraube im Moment der Erstmontage ausgebildet.

Das Gegenstück ist im Falle eines mit einem Gewinde ausgerüsteten Verbindungselements bevorzugterweise als Hülse oder Buchse ausgestaltet. Diese ist im endmontierten Zustand in das zugehörige Sackloch eingepresst und stellt mit seiner Innenoberfläche das korrespondierend zum Verbindungselement ausgebildete Gewinde bereit.

Alternativ zu einer nichtlösbaren Verbindung zwischen Verbindungselement und Gegenstück ist eine nichtlösbare Verbindung, die beispielsweise stoffschlüssig oder quasi stoffschlüssig ausgebildet sein kann. Auch ein nichtlösbarer Formschluss ist denkbar.

Mit der erfindungsgemäßen Ausgestaltung ist aber in jedem Fall die lösbare Verbindung von Verbindungselement und Gegenstück bevorzugt, weil dies einerseits den apparativen Aufwand bei der Erstmontage reduziert und darüber hinaus die Möglichkeit schafft, eine Demontage in einfacher Weise und insbesondere zerstörungsfrei vornehmen zu können, insbesondere im Reparaturfall.

Für eine bestimmungsgemäße Anordnung des Flansches am Magnetgehäuse sind vorzugsweise eine Vielzahl von Verbindungselementen vorgesehen, die jeweils im endmontierten Zustand in Wirkverbindung mit dem Magnetgehäuse stehen. Dabei sind die Verbindungselemente vorzugsweise in Umfangsrichtung der Federkraftbremse gleichverteilt angeordnet.

Für die Anordnung eines Verbindungselements am Magnetgehäuse ist eine Gewindehülse je Verbindungselement vorgesehen. In diese Gewindehülse greift das zugehörige Verbindungselement im endmontierten Zustand ein, und zwar lösbar. Dies ermöglicht in vorteilhafter Weise, insbesondere im Reparaturfall, eine Demontage.

Eine jede Gewindehülse ist in ein vom Magnetgehäuse bereitgestelltes Sackloch eingepresst. Es ist so eine kraft- und/oder formschlüssige Verbindung zwischen der Gewindehülse und dem vom Magnetgehäuse bereitgestellten Sackloch ausgebildet.

Erfindungsgemäß ist ferner vorgesehen, dass die dem Magnetgehäuse zugewandte Randkante der Gewindehülse im endmontierten Zustand unter Belassung eines ein Restvolumen aufweisenden Spaltraums beabstandet zum Grund des Sacklochs angeordnet ist. Die Gewindehülse liegt mithin im endmontierten Zustand nicht am Grund des Sacklochs an, anders als beispielsweise nach der Konstruktion gemäß der DE 10 2013 219 878 B3 vorgesehen.

Das konstruktive Vorsehen eines Spaltraums ermöglicht es in vorteilhafter Weise, die Eindringtiefe der Gewindehülse in die zugehörige Sacklochbohrung in Abhängigkeit der tatsächlich gegebenen Bauteiltoleranzen einstellen zu können. Es kann so in vorteilhafter Weise ein Toleranzausgleich stattfinden, indem die Gewindehülse entsprechend weit in die Sacklochbohrung eingepresst wird, sodass sich im Ergebnis eine optimierte Luftspaltausgestaltung ergibt.

Bei der Konstruktion nach der DE 10 2013 219 878 B3 liegt die dort beschriebene Distanzhülse im endmontierten Zustand mit ihrer dem Magnetgehäuse zugewandten Randkante auf dem Grund des zugehörigen Sacklochs auf. Dies deshalb, damit für eine plastische Verformung der Distanzhülse ein Widerlager gegeben ist. In Abkehr hierzu wird mit der Erfindung eine Gewindehülse vorgeschlagen, die zur Einstellung des optimierten Luftspalts nicht in ihrer Länge gekürzt wird, sondern die in Entsprechung des wünschenswerter Weise zu erzielenden Luftspalts in axialer Richtung entsprechend weit in das zugehörige Sackloch eingeführt wird. Um dies sicher gewährleisten zu können, wird mit der Erfindung ein Sackloch mit einer Tiefe vorgeschlagen, die in axialer Richtung eine Abmessung aufweist, die den im endmontierten Zustand vom Sackloch aufgenommenen Teil der Gewindehülse übersteigt, womit im endmontierten Zustand zwischen der dem Magnetgehäuse zugewandten Randkante der Gewindehülse und dem Grund des Sacklochs ein Spaltraum verbleibt, der ein Restvolumen definiert. Die Längserstreckung des Sacklochs übersteigt mithin die Eindringtiefe des im Sackloch angeordneten Abschnitts der Gewindehülse

Verfahrensseitig kommt zum Einpressen der Gewindehülse in das zugehörige Sackloch ein Pressstempel zum Einsatz. Dieser Pressstempel weist zwei Abschnitte auf, nämlich einen ersten Abschnitt, der mit der Gewindehülse zusammenwirkt, und einen zweiten Abschnitt, der mit der Bremsscheibe zusammenwirkt. Dabei steht der zweite Abschnitt magnetgehäuseseitig axial über den ersten Abschnitt hinaus vor. Diese axiale Beabstandung von erstem Abschnitt und zweitem Abschnitt entspricht dem im endmontierten Zustand in bestimmungsgemäßer Weise ausgebildeten Luftspalt.

Im Montagefall wird der Pressstempel bis auf Anschlag der Ankerplatte am Magnetgehäuse in Richtung auf das Magnetgehäuse verfahren. Aufgrund des axialen Versatzes zwischen erstem Abschnitt und zweitem Abschnitt ergibt sich hierdurch automatisch ein magnetgehäuseferner Überstand der Gewindehülse in Relation zur oberen Abschlusskante der Bremsscheibe. Im endmontierten Zustand liegt auf der Gewindehülse der Flansch der Federkraftbremse auf, sodass sich eine Beabstandung zwischen der magnetgehäuseseitigen Oberfläche des Flansches einerseits und des Magnetgehäuses andererseits ergibt, der der Dicke von Bremsscheibe und Ankerplatte einerseits und dem axialen Überstand von erstem und zweiten Abschnitt andererseits entspricht. Der axiale Überstand stellt dabei den wünschenswerter Weise zu erzielenden Luftspalt dar. Denn im endmontierten Zustand drücken die Druckfederelemente magnetgehäuseseitig gegen die Ankerplatte und damit gegen die in Höhenrichtung darüber angeordnete Bremsscheibe, die sich ihrerseits am Flansch abstützt. Im Ergebnis bildet sich so ein Luftspalt zwischen Ankerplatte und Magnetgehäuse aus, der in seinen geometrischen Abmessungen in Höhenrichtung dem axialen Abstand zwischen erstem und zweitem Abschnitt des Pressstempels entspricht.

Die erfindungsgemäße Ausgestaltung erweist sich insgesamt als vorteilhaft, da eine vereinfachte Montage bei gleichzeitiger Sicherstellung eines optimiert ausgebildeten Luftspalts ermöglicht ist.

Die Luftspalteinstellung ist unabhängig von etwaigen Bauteiltoleranzen, womit sie einfach und reproduzierbar durchführbar ist. Dabei ergibt sich der im endmontierten Zustand ausgebildete Luftspalt aufgrund des axialen Versatzes der vom Pressstempel bereitgestellten Abschnitte, d. h. dem ersten Abschnitt, der mit der Gewindehülse zusammenwirkt und dem zweiten Abschnitt, der mit der Bremsscheibe zusammenwirkt. Dieser axiale Versatz sorgt im Moment der Montage dafür, dass der Flansch in Relation zum Magnetgehäuse derart positioniert wird, dass ein Spaltabstand zwischen Flansch und Magnetgehäuse ausgebildet wird, der der Dicke von Ankerplatte und Bremsscheibe einerseits sowie den gewünschten Luftspaltabmessungen andererseits entspricht. Dabei kann verfahrensseitig der Pressstempel bis auf Anschlag der Ankerplatte am Magnetgehäuse, d. h. bis auf "Null" verfahren werden. Es bedarf insofern keiner besonderen Kraft- oder Wegmessung während einer Montage.

Der Pressstempel kann vielmehr so weit verfahren werden, bis die Ankerplatte am Magnetgehäuse anschlägt, wobei gleichzeitig aufgrund der konstruktiven Ausgestaltung das gewünschte Spaltmaß für den Luftspalt sichergestellt ist. Dabei erlaubt die erfindungsgemäße Konstruktion zudem eine Demontage, insbesondere im Reparaturfall, da das zur Lagefixierung der Flanschplatte am Magnetgehäuse vorgesehene Verbindungselement ein gewindetragendes Verbindungselement, vorzugsweise eine Schraube ist, die in die zugehörige Gewindehülse lösbar eingreift.

Im endmontierten Zustand ist die Gewindehülse in das vom Magnetgehäuse bereitgestellte Sackloch eingepresst. Das Verbindungselement greift unter Ausgestaltung einer Gewindeverbindung in die Gewindehülse ein, womit insgesamt eine lagegenaue und sichere Festlegung des Flansches gegenüber dem Magnetgehäuse sichergestellt ist. Um eine zusätzliche Sicherheit zu schaffen und auch hinsichtlich dynamisch auftretender Kraftbeaufschlagungen sicherzustellen, dass eine verpresste Gewindehülse nicht ausreißt, ist bevorzugter Weise vorgesehen, ein Verbindungselement nicht nur mit der Gewindehülse, sondern zusätzlich auch mit dem Magnetgehäuse als solchen zu verschrauben. Gemäß einem weiteren Merkmal der Erfindung ist deshalb vorgesehen, dass sich in axialer Verlängerung des Sacklochs eine Bohrung an das Sackloch anschließt, in die das Verbindungselement lösbar eingreift. Im endmontierten Zustand greift das Verbindungselement mithin sowohl in die Gewindehülse als auch in die Bohrung ein, die sich in axialer Verlängerung des Sacklochs an dieses anschließt. Im endmontierten Zustand steht das Verbindungselement mithin einerseits über die Gewindehülse in indirekter Verbindung mit dem Magnetgehäuse und andererseits über die sich in axialer Verlängerung an das Sackloch anschließende Bohrung in direkter Verbindung mit dem Magnetgehäuse.

Gemäß einem weiteren Merkmal der Erfindung weist die Bohrung einen im Vergleich zum Innendurchmesser des Sacklochs kleineren Innendurchmesser auf. Damit ist dem Umstand Rechnung getragen, dass in das Sackloch im endmontierten Zustand die Gewindehülse eingepresst ist. Insofern sind die Bohrung und die Gewindehülse hinsichtlich ihrer jeweiligen Innendurchmesser aufeinander abgestimmt.

Gemäß einem weiteren Merkmal der Erfindung ist vorgesehen, dass das Verbindungselement eine gewindefurchende bzw. eine gewindeschneidende Schraube ist. Im Montagefall wird die Schraube sowohl in die Gewindehülse als auch in die sich in axialer Richtung an das Sackloch anschließende Bohrung eingedreht, wobei sich infolge dieses Eindrehens eine Gewindeausgestaltung hinsichtlich sowohl der Gewindebuchse als auch der Bohrung durch Selbstfurchen bzw. Selbstschneiden ausbildet.

Die Verwendung einer gewindefurchenden bzw. gewindeschneidenden Schraube hat den Vorteil, dass sich im Moment des Eindrehens einer Schraube in die sich in axialer Richtung an das Sackloch anschließende Bohrung kein axialer Versatz zwischen Gewindehülse und Sackloch durch eine Verschiebung der Gewindehülse einstellt. Zudem ergibt sich durch die selbstfurchende bzw. selbstschneidende Schraube eine den Spaltraum zwischen der unteren Randkante der Gewindehülse und dem Grund des Sacklochs überbrückende Gewindeausgestaltung von Gewindebuchse und sich an das Sackloch anschließender Bohrung. Es ist so in schon vorbeschriebener Weise ermöglicht, die Gewindehülse in Relation zum Sackloch in Abhängigkeit des gewünschten Luftspalts positionieren zu können, ohne dass es bei einem späteren Eindrehen der Schraube in die sich in Verlängerung des Sacklochs vorgesehene Bohrung dazu kommt, dass sich die relative Lage der Gewindehülse in Relation zum Sackloch bzw. der Bohrung ändert.

Eine Verschraubung der gewindefurchenden bzw. gewindeschneidenden Schraube sowohl mit der Gewindebuchse als auch dem Magnetgehäuse hat den Vorteil, dass zunächst bei einem Einschrauben die Vorspannung zwischen Gewindehülse und Schraube aufgebaut wird, was nicht zu einer Relativbewegung der Gewindehülse im Vergleich zum Magnetgehäuse führen kann. Sobald die Schraube in die Gewindehülse eingesetzt und die Bohrung im Magnetgehäuse erreicht ist, wird keine weiteren Vorspannung zwischen Magnetgehäuse und Schraube aufgebaut. Diese besteht nach wie vor zwischen Gewindehülse und Schraube, sodass in der Konsequenz ein Eindrehen der Schraube auch in das Gehäuse, d. h. die gehäuseseitige Bohrung zu keiner Relativbewegung von Gewindehülse und Gehäuse führen kann.

Für eine bestimmungsgemäße Lagesicherung und Fixierung des Flansches gegenüber dem Magnetgehäuse ist es nicht erforderlich, die Gewindehülse über ihre gesamte Länge Gewinde zu furchen bzw. Gewinde zu schneiden. Es findet vielmehr nur ein Schraubeneingriff in einem dem Magnetgehäuse zugewandten unteren Abschnitt der Gewindehülse statt. Es ist deshalb gemäß einem weiteren Merkmal der Erfindung vorgesehen, dass die Gewindehülse innenseitig einen mit der gewindefurchenden bzw. gewindeschneidenden Schraube zusammenwirkenden Bereich aufweist, der sich in axialer Richtung über einen Teilabschnitt der Gewindehülse erstreckt. Dies vereinfacht die Montage, stellt aber zugleich eine sichere Anordnung des Flansches am Magnetgehäuse im endmontierten Zustand sicher.

Auch die Verpressung zwischen Gewindehülse und Magnetgehäuse braucht nicht über die gesamte Längserstreckung der Gewindehülse stattfinden. Es kann vielmehr nur ein Abschnitt vorgesehen sein, der Sackloch zugewandt glatt oder aufgeraut ausgebildet ist, insbesondere gerändelt ist. Gemäß einem weiteren Merkmal der Erfindung ist deshalb vorgesehen, dass die Gewindehülse außenseitig auf ihrer Mantelfläche einen aufgerauten, insbesondere gerändelten, Bereich aufweist, der sich in axialer Richtung über einen Teilabschnitt der Gewindehülse erstreckt. Über diesen Teil steht die Gewindehülse im endmontierten Zustand durch Verpressen in Wirkverbindung mit dem Magnetgehäuse, wobei aufgrund der aufgerauten Ausgestaltung der Mantelfläche der Gewindehülse eine form- und kraftschlüssige Verbindung gegeben ist. Alternativ oder in Kombination mit einem solch ausgebildeten Bereich kann ferner ein Bereich vorgesehen sein, der in radialer Richtung der Gewindehülse abgesetzt ist, das heißt ein Bereich, der aus der von der Gewindehülse außenseitig bereitgestellten Mantelfläche radial vorsteht. Es wird mithin ein Bereich vorgeschlagen, der radial abgesetzt und/oder aufgeraut ausgebildet ist.

Verfahrensseitig wird gemäß einem weiteren Merkmal der Erfindung ferner vorgeschlagen, dass die Ankerplatte unter Zwischenordnung von Druckfederelementen am Magnetgehäuse angeordnet wird. Diese Druckfederelemente werden im Montagefall vom Pressstempel zusammengedrückt, und zwar so weit, bis die Ankerplatte am Magnetgehäuse anliegt, d. h. infolge der Kraftbeaufschlagung durch den Pressstempel am Magnetgehäuse anschlägt. Sobald diese Stellung der Ankerplatte erreicht ist, ist der Einpressvorgang der Gewindehülse beendet, wobei aufgrund der schon vorbeschriebenen Ausgestaltung des Pressstempels sichergestellt ist, dass die Gewindehülse in eine solche Tiefe in das zugehörige Sackloch eingepresst ist, dass im endmontierten Zustand ein wunschgemäß ausgebildeter Luftspalt zwischen Ankerplatte und Magnetgehäuse gegeben ist. Dabei entsteht dieser Luftspalt dadurch, dass im endmontierten Zustand die zwischen Ankerplatte und Magnetgehäuse angeordneten Druckfederelemente die Ankerplatte vom Magnetgehäuse wegdrücken, womit sich der gewünschte Luftspalt zwischen Ankerplatte und Magnetgehäuse ausbildet.

Gemäß einem weiteren Merkmal der Erfindung ist in diesem Zusammenhang vorgesehen, dass der axiale Versatz zwischen dem ersten Abschnitt und dem zweiten Abschnitt des Pressstempels in Entsprechung eines gewünschten Luftspalts zwischen Ankerplatte und Magnetgehäuse im endmontierten Zustand gewählt wird. Es wird mithin vorgeschlagen, je nach gewünschtem Luftspalt entsprechende Pressstempel vorzusehen. Dabei können diese Pressstempel unabhängig von einer etwaigen Bauteiltoleranz eingesetzt werden, wobei in jedem Fall sichergestellt ist, dass in Abhängigkeit des gewählten Pressstempels, d. h. des gewählten axialen Versatzes zwischen dem ersten Abschnitt und dem zweiten Abschnitt eines jeweiligen Pressstempels, eine entsprechende Luftspaltausgestaltung im Ergebnis erreicht wird.

Gemäß einem weiteren Merkmal der Erfindung ist vorgesehen, dass der Flansch unter Zwischenordnung der Bremsscheibe, der Ankerplatte und der Druckfederelemente mit dem Magnetgehäuse verschraubt wird, wobei als Verbindungselement eine gewindeschneidende bzw. eine gewindefurchende Schraube verwendet wird, die in die Gewindehülse eingebracht wird.

Nach einem bestimmungsgemäßen Einpressen der Gewindehülse in die zugehörige Sacklochbohrung, wird der Pressstempel entfernt und magnetgehäuseentfernt wird auf die Bremsscheibe der Flansch aufgelegt. Dabei ergibt sich die Beabstandung zwischen Flansch und Magnetgehäuse durch den aus dem Sackloch des Magnetgehäuses hinaus vorstehenden Abschnitt der Gewindehülse. Dieser Abschnitt definiert die Beabstandung von Flansch und Magnetgehäuse. Dabei entspricht diese Beabstandung der Dicke von Bremsscheibe und Ankerplatte einerseits sowie der gewünschten Luftspaltausgestaltung andererseits, die sich infolge des axialen Versatzes von erstem Abschnitt und zweitem Abschnitt des Pressstempels ergibt. In denkbar einfacher Weise kann so eine einfache Montage erreicht werden, und dies bei gleichzeitiger Sicherstellung einer gewünschten Luftspaltausgestaltung, und dies unabhängig von etwaigen Bauteiltoleranzen. Ferner bedarf es für eine bestimmungsgemäße Montage keiner Abstandshalter, insbesondere keiner Lehren, wie dies nach dem Stand der Technik erforderlich ist.

Weitere Merkmale und Vorteile der Erfindung ergeben sich aus der nachfolgenden Beschreibung anhand der Figuren. Dabei zeigen
- Fig. 1: in schematischer Explosionsdarstellung eine erfindungsgemäße Federkraftbremse;
- Fig. 2: in geschnittener Seitenansicht einen ersten Montageschritt zur Herstellung der Federkraftbremse nach Fig. 1;
- Fig. 3: in geschnittener Seitenansicht einen zweiten Montageschritt zur Herstellung der Federkraftbremse nach Fig. 1;
- Fig. 4: in geschnittener Seitenansicht eine endmontierte Federkraftbremse nach der Erfindung und
- Fig. 5: in schematischer Diagrammdarstellung die Anzugkraft einer erfindungsgemäßen Federkraftbremse.

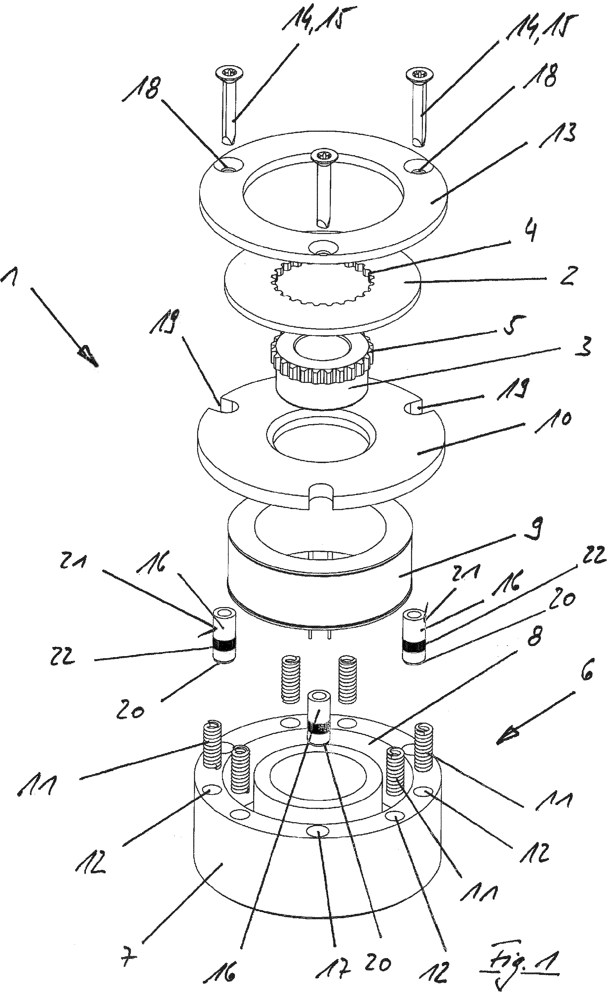

Figur 1 lässt schematisch in einer Explosionsdarstellung eine erfindungsgemäße Federkraftbremse 1 erkennen. Diese ist elektromagnetisch betätigbar ausgebildet und verfügt über einen Elektromagneten 6, eine Bremsscheibe 2 und einen Flansch 13.

Im endmontierten Zustand ist die Bremsscheibe 2 auf einer in den Figuren nicht näher dargestellten Welle, beispielsweise der Ausgangswelle eines Elektromotors, verdrehfest, gleichwohl aber in Wellenlängsrichtung axial verschieblich angeordnet. Zu diesem Zweck kann in an sich bekannter Weise eine Welle-Nabe-Verbindung vorgesehen sein, wobei die Bremsscheibe 2 eine Verzahnungskontur 4 bereitstellt, die im endmontierten Zustand mit der Gegenkontur 5 einer auf einer Welle angeordneten Nabe 3 in Wirkverbindung steht.

Der Elektromagnet 6 verfügt über ein Magnetgehäuse 7, das im endmontierten Zustand eine Spule 9 aufnimmt. Zu diesem Zweck verfügt das Magnetgehäuse 7 über einen Ringraum 8, der korrespondierend zur geometrischen Ausgestaltung der Spule 9 ausgebildet ist und diese im endmontierten Zustand aufnimmt.

Die Federkraftbremse 1 verfügt des Weiteren über eine Ankerplatte 10, die axial verschieblich zwischen der Bremsscheibe 2 und dem Magnetgehäuse 7 angeordnet ist. Diese axial verschiebliche Anordnung der Ankerplatte 10 erfolgt unter Zwischenordnung von Druckfederelementen 11. Diese sind in vom Magnetgehäuse 7 bereitgestellten Bohrungen 12 angeordnet und drücken im endmontierten Zustand in Höhenrichtung von unten gegen die Ankerplatte 10. Die Druckfederelemente 11 wirken mithin auf die Ankerplatte 10 ein, und zwar über die der Bremsscheibe 2 abgewandte Seite der Ankerplatte 10.

Die Ankerplatte 10 ist gegenüber dem Magnetgehäuse 7 verdrehfest positioniert, was durch Formschluss dadurch erreicht ist, dass die Ankerplatte 10 Ausnehmungen 19 aufweist, die im endmontierten Zustand mit im Weiteren noch näher beschriebenen Hülsen zusammenwirken, die als Gewindehülsen 16 der positionsfesten und -sicheren Anordnung des Flansches 13 am Magnetgehäuse 7 dienen.

Im Ergebnis der vorbeschriebenen Konstruktion ist die Ankerplatte 10 im endmontierten Zustand verdrehfest, gleichwohl aber unter Zwischenordnung der Druckfederelemente 11 axial verschieblich gegenüber dem Magnetgehäuse 7 am Magnetgehäuse 7 angeordnet.

Die Federkraftbremse 1 verfügt des Weiteren über den schon benannten Flansch 13. Dieser ist verdrehfest mit dem Magnetgehäuse 7 verbunden, zu welchem Zweck gewindetragende Verbindungselemente 14 in Form von Schrauben 15 vorgesehen sind, die durch flanschseitige Bohrungen 18 hindurchgeführt sind und im endmontierten Zustand in magnetgehäuseseitige Gewindebuchsen 16 lösbar eingreifen. Dabei sind die Bremsscheibe 2 und die Ankerplatte 10 zwischen Flansch 13 und Magnetgehäuse 7 angeordnet.

Bei einer bestromten Spule 9 wird das Magnetgehäuse 7 des Elektromagneten 6 magnetisiert, was zu einem Anziehen der Ankerplatte 10 durch das Magnetgehäuse 7 führt. Es bildet sich so ein die Dicke der Bremsscheibe 2 übersteigender Spalt zwischen Flansch 13 und Ankerplatte 10 aus, sodass die Bremsscheibe 2 zwischen Flansch 13 und Ankerplatte 10 frei verdrehen kann. Dies ermöglicht eine Verdrehbewegung der die Bremsscheibe 2 tragenden Welle, beispielsweise eines Elektromotors.

Sobald eine Bestromung der Spule 9 abgeschaltet wird oder ausfällt, unterbleibt ein magnetisches Anziehen der Ankerplatte 10 durch den Elektromagneten 6, sodass die Ankerplatte 10 induziert durch die Druckfederelemente 14 mit Bezug auf die Zeichnungsebene nach Figur 1 nach oben verfahren und gegen den Flansch 13 gedrückt wird, und dies unter Zwischenordnung der Bremsscheibe 2. Infolgedessen kommt es zu einem Reibschluss, insbesondere zwischen der Ankerplatte 10 und der Bremsscheibe 2, aber auch zwischen der Bremsscheibe 2 und dem Flansch 13. Dieser Reibschluss sorgt für ein Festsetzen der Bremsscheibe 2 mit der Folge, dass eine Verdrehbewegung der Bremsscheibe 2 nicht weiter möglich ist und damit auch nicht eine Verdrehbewegung der die Bremsscheibe 2 tragenden Welle, beispielsweise der Welle eines Elektromotors. Dieser ist mithin durch die Festsetzung der Bremsscheibe 2 abgebremst.

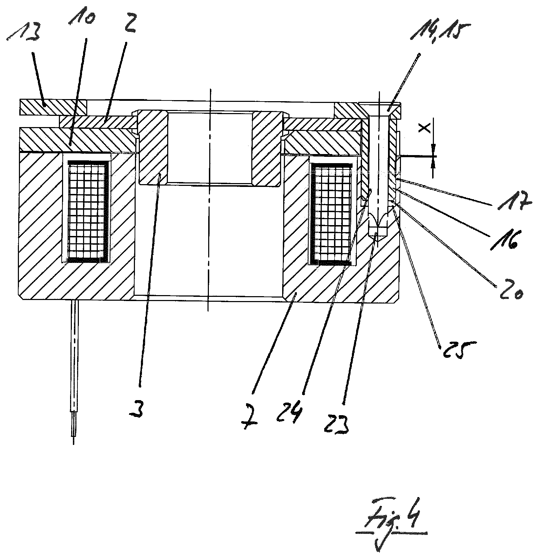

Der sich im Bestromungsfall der Spule 9 ergebende und die Dicke der Bremsscheibe 2 übersteigende Spalt zwischen Flansch 13 und Ankerplatte 10 ergibt sich in Abhängigkeit des sich im endmontierten Zustand zwischen Ankerplatte 10 und Magnetgehäuse 7 ausbildenden Luftspalts, wie in Figur 4 dargestellt.

Im endmontierten Zustand drücken bei unbestromter Spule 9 die Druckfederelemente 11 in Höhenrichtung gemäß Figur 4 von unten gegen die Ankerplatte 10, die wiederum unter Zwischenordnung der Bremsscheibe 2 gegen den gegenüber dem Magnetgehäuse 7 festgelegten Flansch 13 drückt. Infolgedessen ergibt sich zwischen Ankerplatte 10 und Magnetgehäuse 7 ein Luftspalt, der das Spaltmaß X aufweist, wie sich dies aus Figur 4 ergibt. Um diesen Luftspalt in optimierter Weise einstellen zu können, kommen gemäß der erfindungsgemäßen Konstruktion Gewindehülsen 16 zum Einsatz, die in Entsprechung der gewünschten Luftspaltausgestaltung in zugehörige Sacklöcher 17 des Magnetgehäuses 7 entsprechend weit eingepresst werden, wie sich dies insbesondere aus einer Zusammenschau der Figuren 1 bis 3 ergibt.

Wie zunächst die Darstellung nach Figur 1 erkennen lässt, dienen zur positionsgenauen und -sicheren Anordnung des Flansches 13 am Magnetgehäuse 7 drei Schrauben 15. Dementsprechend sind auch drei Gewindehülsen 16 vorgesehen, in die im endmontierten Zustand eine Schraube 15 jeweils lösbar eingreift.

Zur Anordnung der Gewindehülsen 16 am Magnetgehäuse 7 ist je Gewindehülse 16 ein Sackloch 17 vorgesehen, das vom Magnetgehäuse 7 bereitgestellt ist. Im endmontierten Zustand ist eine Gewindehülse 16 in das zugehörige Sackloch 17 eingepresst. Dabei verfügt eine jede Gewindehülse 16 auf ihrer Mantelfläche 21 über einen Bereich 22, der aufgeraut, insbesondere gerändelt ausgebildet ist. Hierdurch ist ein verbesserter Presssitz einer Gewindehülse 16 innerhalb eines zugehörigen Sacklochs 17 gewährleistet.

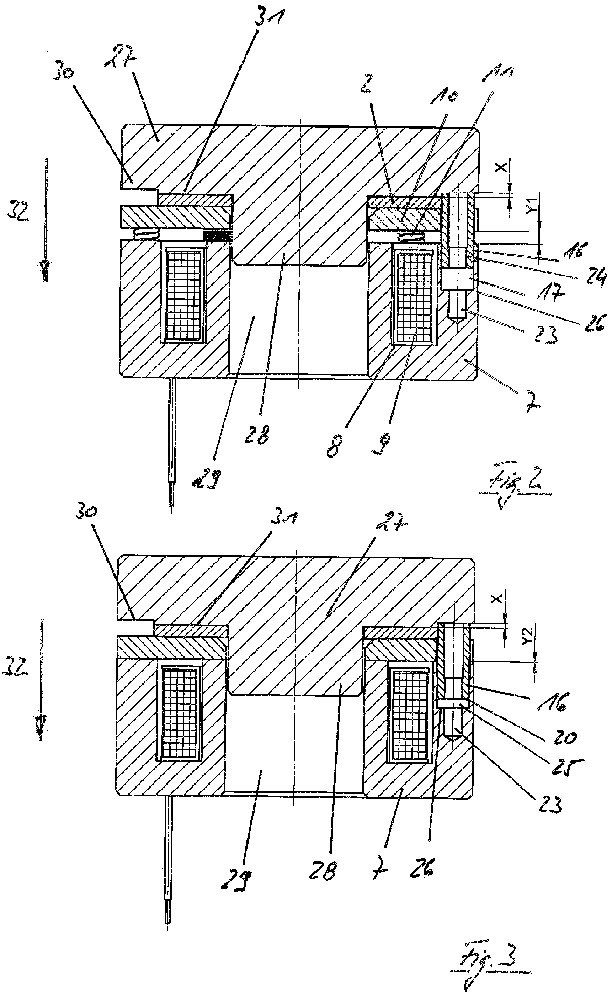

Wie sich insbesondere aus der Darstellung nach Figur 3 ergibt, ist im endmontierten Zustand einer Gewindehülse 16 die dem Magnetgehäuse 7 zugewandte Randkante 20 der Gewindehülse 16 unter Belassung eines ein Restvolumen aufweisenden Spaltraums 25 beabstandet zum Grund 26 des Sacklochs 17 angeordnet. Ein Sackloch 17 ist mithin in Richtung des Pfeils 32, d. h. in axialer Richtung länger ausgebildet als der im endmontierten Zustand vom Sackloch 17 aufgenommene Teil der Gewindehülse 16. Über die Einpresstiefe der Gewindehülse 16 in das zugehörige Sackloch 17 kann so in einfacher Weise die spätere Abmessung des Luftspalts zwischen Ankerplatte 10 und Magnetgehäuse 7 ausgebildet werden.

Verfahrensseitig kommt für ein Einpressen einer Gewindehülse 16 in das zugehörige Sackloch 17 ein Pressstempel 27 zum Einsatz, wie in den Figuren 2 und 3 dargestellt. Dabei zeigt Figur 2 einen ersten Montageschritt und Figur 3 einen zweiten Montageschritt.

Gemäß einem ersten Montageschritt sind die Druckfederelemente 11 in die zugehörigen Bohrungen 12 eingesetzt und die Bremsscheibe 2 ist unter Zwischenordnung der Ankerplatte 10 auf die Druckfederelemente 11 aufgelegt. Ferner sind in die zugehörigen Sacklöcher 17 die Gewindebuchsen 16 mit ihrem jeweiligen dem Magnetgehäuse 7 zugewandten Endabschnitt eingeführt. Der Pressstempel 27 verfügt über zwei jeweils in Umfangsrichtung umlaufende Ringabschnitte, nämlich über einen ersten Abschnitt 30 und einen zweiten Abschnitt 31. Dabei wirkt der erste Abschnitt 30 mit den Gewindehülsen 16 zusammen, wohingegen der zweite Abschnitt 31 mit der Bremsscheibe 2 zusammenwirkt.

Wie sich aus den Figuren 2 und 3 ergibt, steht der zweite Abschnitt 31 des Pressstempels 27 in Richtung des Pfeils 32, d. h. in axialer Richtung auf das Magnetgehäuse 7 gegenüber dem ersten Abschnitt 30 vor. Dabei beträgt der axiale Abstand bzw. Versatz zwischen den beiden Abschnitten 30 und 31 dem späteren Luftspalt, d. h. der zweite Abschnitt 31 überragt den ersten Abschnitt 30 in Pfeilrichtung 32 um das Spaltmaß X.

Figur 3 lässt einen zweiten Montageschritt erkennen. Gemäß diesem Montageschritt ist der Pressstempel 27 auf "Null" an das Magnetgehäuse 7 herangefahren. In dieser Stellung liegt die Ankerplatte 10 unter Zusammendrücken der Druckfederelemente 11 auf Anschlag am Magnetgehäuse 7 an. Ein weiteres Verfahren des Pressstempels 27 in Relation zum Magnetgehäuse 7 ist nicht möglich. Zwecks einer ausgerichteten Führung des Pressstempels 27, auch um eine ungleichmäßige Kraftbeaufschlagung der einzelnen Gewindehülsen 16 zu vermeiden, ist der Pressstempel 27 während eines Pressvorgangs mit seinem Abschnitt 28 von der Öffnung 29 des Magnetgehäuses 7 aufgenommen und hierdurch geführt.

Wie sich bei einem Vergleich der Figuren 2 und 3 ergibt, ist die Gewindehülse 16 infolge eines Verfahrens des Pressstempels 27 in das zugehörige Sackloch 17 eingepresst worden. Das ehemals nach Figur 2 vorgesehene Spaltmaß Y1 ist auf Y2=0 zusammengeschrumpft. Nach wie vor aber überragt die Gewindehülse 16 die Bremsscheibe 2, und zwar um das Spaltmaß X. Die Eindringtiefe der Gewindehülse 16 in das zugehörige Sackloch 17 ergibt sich mithin in Abhängigkeit der Dicke von Ankerplatte 10 und Bremsscheibe 2, wobei in vorteilhafter Weise etwaige Toleranzen infolge der sich ergebenden Eindringtiefe ausgeglichen sind.

In einem letzten Montageschritt, der in Figur 4 gezeigt ist, wird der Pressstempel 27 entfernt und es wird der Flansch 13 auf die Gewindehülsen 16 aufgelegt. In schon vorbeschriebener Weise kann nun eine Verschraubung des Flansches 13 mit dem Magnetgehäuse 7 vorgenommen werden. Dabei drücken im endmontierten Zustand die Druckfederelemente gegen die Ankerplatte 10, was ein Anlegen der Ankerplatte 10 unter Zwischenordnung der Bremsscheibe 2 an den Flansch 13 bewirkt. Damit stellt sich ein Luftspalt zwischen Ankerplatte 10 und Magnetgehäuse 7 ein, und zwar mit dem Spaltmaß X, d. h. dem Spaltmaß, das sich aufgrund des axialen Versatzes von erstem Abschnitt 30 und zweitem Abschnitt 31 des Pressstempels 27 ergibt.

Wie sich aus einer Zusammenschau der Figuren 2 und 4 ferner ergibt, schließt sich an ein Sackloch 17 in axialer Richtung 32 eine Bohrung 23 an. Im endmontierten Zustand greift in diese Bohrung 23 die zugehörige Schraube 15 ein, wie sich dies aus der Darstellung nach Figur 4 ergibt. Die Schraube 15 steht mithin nicht nur in Wirkverbindung mit der Gewindehülse 16, sondern auch mit der Bohrung 23. Die Schraube 15 ist mithin über die Bohrung 23 in direkter Verbindung mit dem Magnetgehäuse 7 und über die Gewindehülse 16 in indirekter Verbindung mit dem Magnetgehäuse 7.

Für eine vereinfachte Montage ergibt sich eine Gewindeausgestaltung zwischen Schraube 15 und Gewindehülse 16 nicht über die gesamte Längserstreckung der Gewindehülse 16, sondern nur über einen Bereich 24, der sich in axialer Richtung 32 über einen Teilabschnitt der Gewindehülse 16 erstreckt.

Die Schraube 15 ist als selbstfurchende bzw. selbstschneidende Schraube ausgebildet, d. h. beim ersten Einbringen der Schraube 15 in die Gewindehülse 16 bzw. die Bohrung 23, wird sowohl hülsenseitig als auch bohrungsseitig ein entsprechendes Gewinde durch Selbstfurchen bzw. Selbstschneiden ausgebildet. Die Verwendung einer selbstfurchenden bzw. selbstschneidenden Schraube 15 hat den Vorteil, dass es bei einem Eindrehen der Schraube 15 in die Bohrung 23 nicht ungewollt dazu kommen kann, dass sich die Gewindehülse 16 in axialer Richtung verschiebt. Eine positionsgenaue und -sichere Anordnung der Gewindehülse 16 und damit auch des Flansches 13 ist so sichergestellt.

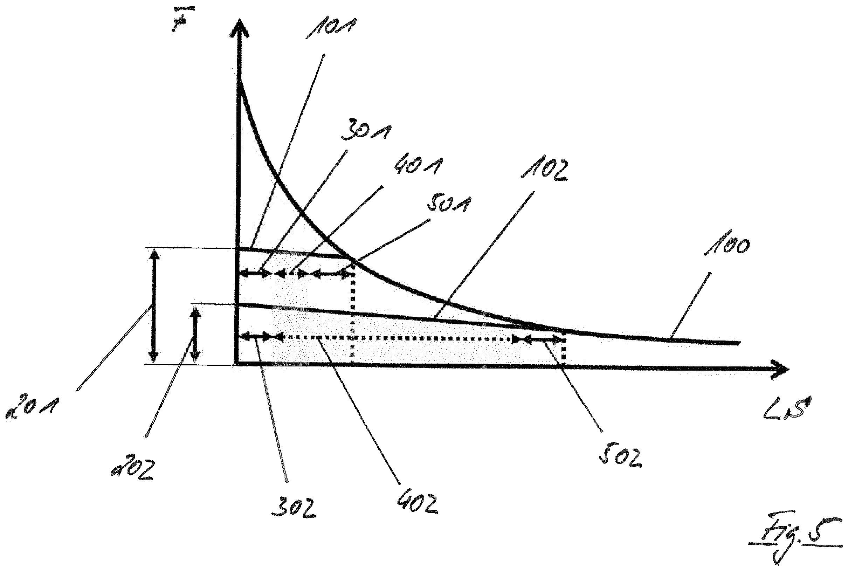

Figur 5 lässt ergänzend in einer schematischen Diagrammdarstellung die Anzugkraft einer erfindungsgemäßen Federkraftbremse 1 erkennen, wobei die Kraft F über dem Luftspalt LS abgetragen ist.

Es sind zwei mögliche Ausführungsformen dargestellt, und zwar gemäß der Bezugszeichen 101 und 102.

Bei der Auslegung einer Federkraftbremse 1 sind hinsichtlich des Luftspalts LS drei Komponenten zu berücksichtigen, aus denen sich der spätere Luftspalt LS zusammensetzt. Diese Komponenten sind der sogenannte Neuluftspalt 301 bzw. 302, die sogenannte Verschleißreserve 501 bzw. 502 sowie die Toleranz 401 bzw. 402.

"Neuluftspalt" meint dabei das Mindestspaltmaß, das im Nicht-Bremszustand vorhanden sein muss, damit die Bremsscheibe 2 bei axial verschobener Ankerplatte 10 frei durchdrehen kann. Die Ankerplatte 10 muss sich mithin zumindest um das Maß des "Neuluftspalts" 301 bzw. 302 bewegen können, um die Bremsscheibe 2 aus der gebremsten Stellung freigeben und in die nicht gebremste Stellung überführen zu können.

Die "Verschleißreserve" ist verwenderseitig vorgegeben und berücksichtigt, dass die in dynamischen Bremsfällen reibungsbeanspruchten Bauteile, insbesondere betreffend die Bremsscheibe 2, die Ankerplatte 10 sowie den Flansch, einem Verschleiß unterliegen, womit der Luftspalt LS im bestimmungsgemäßen Betrieb unvermeidbar anwächst. Dabei darf selbst bei maximalem Verschleiß der Luftspalt LS nicht eine Größe annehmen, bzw. mit der Zeit erhalten, die vom angelegten Magnetfeld nicht mehr überbrückt werden kann. In diesem Fall würde nämlich ein Anziehen der Ankerplatte 10 durch den Elektromagneten 6 aufgrund eines zu großen Luftspaltes LS nicht mehr stattfinden können.

Die dritte Komponente des Luftspalts LS ist die Toleranz 401 bzw. 402. Dabei ergibt sich die Toleranz als Summe der Einzeltoleranzen, womit der Luftspalt LS weniger groß ausfällt, wenn die Ankerplatte 10 und die Bremsscheibe 2 im oberen Bereich ihrer jeweiligen Toleranz liegen, und der Luftspalt LS dementsprechend größer ausfällt, wenn sich die Ankerplatte 10 und die Bremsscheibe 2 im unteren Bereich ihres Toleranzfensters befinden. Auch dieser Toleranzbereich muss vom Elektromagneten 6 für eine bestimmungsgemäße Verwendung überbrückt werden können.

Unter der Annahme, dass der Neuluftspalt und die Verschleißreserve vorgegeben bzw. technisch nicht unterschritten werden können, ergibt sich bei bestimmungsgemäßer Luftspaltausgestaltung eine gewisse Toleranz, die noch akzeptabel ist. Wie sich aus dem Diagramm nach Figur 5 ableiten lässt, verringert sich die zulässige Toleranz bei wünschenswerter Weise höheren Druckfederkräften 201 bzw. 202. In anderen Worten: Um ein bestimmtes Drehmoment erhalten zu können, sind größere Druckfederkräfte 201 bzw. 202 erforderlich, die durch entsprechend ausgebildete Druckfederelemente 11 bereitzustellen sind. Wenn jedoch die Toleranzen zu hoch ausfallen, ist ein bestimmungsgemäßer Betrieb der Federkraftbremse 1 nicht möglich, weil aufgrund des zu großen Luftspalts LS ein bestimmungsgemäßes Anziehen der Ankerplatte 10 durch den Elektromagneten 6 nicht mehr gewährleistet ist. Es ist mithin eine Optimierung der Luftspalteinstellung erforderlich, um bei ansonsten unveränderter Konstruktion größere Druckfederkräfte mit dem Ziel eines größeren Drehmoments vorsehen zu können.

Diese optimierte Luftspalteinstellung ist mit der erfindungsgemäßen Konstruktion ermöglicht, indem in schon vorbeschriebener Weise toleranzunabhängig ein Einpressen der Gewindehülsen 16 in die zugehörigen Sacklöcher 17 stattfindet, und zwar in einer solchen Weise, dass eine Einpresstiefe erreicht ist, die das gewünschte Spaltmaß X hinsichtlich des Luftspalts sicherstellt, und zwar einfach dadurch, dass der Pressstempel 27 auf Anschlag der Ankerplatte 10 auf das Magnetgehäuse 7 verfährt. Aufgrund des radialen Versatzes zwischen den Abschnitten 30 und 31 des Pressstempels 27 ergibt sich automatisch ein späteres Spaltmaß X hinsichtlich des Luftspalts, das wunschgemäß ausgebildet ist. Dabei lässt sich in Entsprechung der Darstellung nach Figur 5 die Toleranzkomponente 401 bzw. 402 des Luftspalts LS in vorteilhafter Weise minimieren. Diese Optimierung kann zu dreierlei Zwecken wahlweise genutzt werden.

Es kann erstens ein höheres Drehmoment bei ansonsten gleichbleibendem Bauraum erzielt werden, weil größere Druckfederkräfte aufgebracht werden können. Alternativ kann zweitens für eine bestimmungsgemäße Verwendung bei unveränderten Spulenabmessungen die elektrische Leistung des Elektromagneten 6 verringert werden, was den Energieverbrauch senkt und auch zu weniger Anforderungen hinsichtlich der Kühlung führt. Ferner ist es alternativ drittens möglich, bei unveränderter elektrischer Leistung eine schwächere Spule 9 einzusetzen, die geometrisch in axialer Richtung weniger aufbaut, d. h. kürzer ausfällt, sodass in den geometrischen Abmessungen eine kompaktere Federkraftbremse 1 ausgestaltet werden kann. Wahlweise lassen sich die voraufgeführten Vorteile auch miteinander kombinieren.

Welche der voraufgeführten Vorteile einer erfindungsgemäßen Optimierung verwenderseitig auch immer gewünscht sein mögen, von entscheidender Bedeutung hinsichtlich der konstruktiven Ausgestaltung nach der Erfindung ist, dass eine toleranzbefreite, jedenfalls aber toleranzreduzierte Optimierung der Luftspaltausgestaltung ermöglicht ist, und dies bei Egalisierung der betroffenen Einzelteiltoleranzen und gleichzeitig einfacher Montage.

### Bezugszeichenliste

- 1: Federkraftbremse
- 2: Bremsscheibe
- 3: Nabe
- 4: Verzahnungsgeometrie
- 5: Gegengeometrie
- 6: Elektromagnet
- 7: Magnetgehäuse
- 8: Ringraum
- 9: Spule
- 10: Ankerplatte
- 11: Druckfederelement
- 12: Bohrung
- 13: Flansch
- 14: Verbindungselement
- 15: Schraube
- 16: Gewindehülse
- 17: Sackloch
- 18: Bohrung
- 19: Ausnehmung
- 20: Randkante
- 21: Mantelfläche
- 22: Bereich
- 23: Bohrung
- 24: Bereich
- 25: Spaltraum
- 26: Grund
- 27: Pressstempel
- 28: Führungsabschnitt
- 29: Öffnung
- 30: erster Abschnitt
- 31: zweiter Abschnitt
- 32: Pfeil
- 100: Auszugskraft
- 101: erste Ausführung
- 102: zweite Ausführung
- 201: Druckfederkraft
- 202: Druckfederkraft
- 301: Neuluftspalt
- 302: Neuluftspalt
- 401: Toleranz
- 402: Toleranz
- 501: Verschleißreserve
- 502: Verschleißreserve

- F: Kraft
- LS: Luftspalt

## Patentansprüche

1. Elektromagnetisch betätigbare Federkraftbremse, mit
- einer auf einer Welle verdrehfest, gleichwohl aber axial verschieblich anordbaren Bremsscheibe (2),
- einem Elektromagneten (6), der ein Magnetgehäuse (7) und eine davon aufgenommene Spule (9) aufweist,
- einer zwischen der Bremsscheibe (2) und dem Magnetgehäuse (7) axial verschieblich angeordneten Ankerplatte (10) und
- einem Flansch (13), der mittels eines Verbindungselements (14) am Magnetgehäuse (7) verdrehfest angeordnet ist,
wobei die Bremsscheibe (2) und die Ankerplatte (10) zwischen dem Flansch (13) und dem Magnetgehäuse (7) angeordnet sind,
**dadurch gekennzeichnet, dass** das Verbindungselement (14) in ein korrespondierend zum Verbindungselement (14) ausgebildetes Gegenstück eingreift, das in ein vom Magnetgehäuse (7) bereitgestelltes Sackloch (17) eingepresst ist, wobei die dem Magnetgehäuse (7) zugewandte Randkante (20) des Gegenstücks unter Belassung eines ein Restvolumen aufweisenden Spaltraums (25) beabstandet zum Grund (26) des Sacklochs (17) angeordnet ist.

2. Federkraftbremse nach Anspruch 1, **dadurch gekennzeichnet, dass** das Verbindungselement (14) ein Gewinde trägt.

3. Federkraftbremse nach Anspruch 2, **dadurch gekennzeichnet, dass** das Verbindungselement (14) eine Schraube (15), insbesondere eine gewindefurchende bzw. gewindeschneidende Schraube (15) ist.

4. Federkraftbremse nach einem der vorhergehenden Ansprüche, **dadurch gekennzeichnet, dass** das Gegenstück eine Gewindehülse (16) ist.

5. Federkraftbremse nach Anspruch 4, **dadurch gekennzeichnet, dass** das Verbindungselement (14) in die Gewindehülse (16) lösbar eingreift.

6. Federkraftbremse nach Anspruch 1, **dadurch gekennzeichnet, dass** sich in axialer Verlängerung des Sacklochs (17) eine Bohrung (23) an das Sackloch (17) anschließt, in die das Verbindungselement (14) lösbar eingreift.

7. Federkraftbremse nach Anspruch 1 oder 2, **dadurch gekennzeichnet, dass** die Bohrung (23) einen im Vergleich zum Innendurchmesser des Sacklochs (17) kleineren Innendurchmesser aufweist.

8. Federkraftbremse nach Anspruch 4, **dadurch gekennzeichnet, dass** die Gewindehülse (16) innenseitig einen mit der gewindefurchenden bzw. gewindeschneidenden Schraube (15) zusammenwirkenden Bereich (24) aufweist, der sich in axialer Richtung über einen Teilabschnitt der Gewindehülse (16) erstreckt.

9. Federkraftbremse nach einem der vorhergehenden Ansprüche 4 bis 8, **dadurch gekennzeichnet, dass** die Gewindehülse (16) außenseitig auf ihrer Mantelfläche (21) einen radial abgesetzten und/oder aufgerauten, insbesondere gerändelten, Bereich (22) aufweist, der sich in axialer Richtung über einen Teilabschnitt der Gewindehülse (16) erstreckt.

10. Verfahren zur Herstellung einer elektromagnetisch betätigbaren Federkraftbremse (1) nach einem der vorhergehenden Ansprüche, **dadurch gekennzeichnet,**
- **dass** das Magnetgehäuse (7) in einer Haltevorrichtung fixiert wird,
- **dass** die Bremsscheibe (2) unter Zwischenordnung der Ankerplatte (10) am Magnetgehäuse (7) angeordnet wird und
- **dass** das Gegenstück (16) mittels eines Pressstempels (27) in das Sackloch (17) eingepresst wird,
wobei der Pressstempel (27) mit einem ersten Abschnitt (30) mit dem Gegenstück und mit einem zweiten Abschnitt (31) mit der Bremsscheibe (2) zusammenwirkt,
wobei der zweite Abschnitt (31) magnetgehäuseseitig axial über den ersten Abschnitt (30) hinaus vorsteht und
wobei der Pressstempel (27) bis auf Anschlag der Ankerplatte (10) am Magnetgehäuse (7) in Richtung auf das Magnetgehäuse (7) verfahren wird.

11. Verfahren nach Anspruch 10, **dadurch gekennzeichnet, dass** die Ankerplatte (10) unter Zwischenordnung von Druckfederelementen (11) am Magnetgehäuse (7) angeordnet wird.

12. Verfahren nach Anspruch 10 oder 11, **dadurch gekennzeichnet, dass** der axiale Versatz zwischen dem ersten Abschnitt (30) und dem zweiten Abschnitt (31) des Pressstempels (27) in Entsprechung eines gewünschten Luftspalts (LS) zwischen Ankerplatte (10) und Magnetgehäuse (7) im endmontierten Zustand gewählt wird.

13. Verfahren nach einem der vorhergehenden Ansprüche 10 bis 12, **dadurch gekennzeichnet, dass** der Flansch (13) unter Zwischenordnung der Bremsscheibe (2), der Ankerplatte (10) und der Druckfederelemente (11) mit dem Magnetgehäuse (7) verschraubt wird, wobei als Verbindungselement (14) eine Schraube (15), insbesondere eine gewindefurchende bzw. gewindeschneidende Schraube (15), verwendet wird, die in das Gegenstück eingebracht wird.

## Claims

1. Electromagnetically actuated spring-applied brake, comprising
- a break disk (2) that can be arranged on a shaft in a manner rotationally fixed but nevertheless axially displaceable,
- an electromagnet (6) having a magnet housing (7) and a coil (9) received therein,
- an armature plate (10) arranged between the brake disk (2) and the magnet housing (7) so that it can be moved axially, and
- a flange (13) which is arranged rotationally fixed on the magnet housing (7) by means of a connecting element (14),
wherein the brake disk (2) and the armature plate (10) are arranged between the flange (13) and the magnet housing (7),
**characterized in that** the connecting element (14) engages into a counterpart designed to correspond to the connecting element (14), which counterpart is pressed into a blind hole (17) provided by the magnet housing (7) , wherein the edge (20) of the counterpart facing the magnet housing (7) is arranged in a manner spaced from the bottom (26) of the blind hole (17) leaving a gap space (25) having a residual volume.

2. Spring-applied brake according to claim 1, **characterized in that** the connecting element (14) has a thread.

3. Spring-applied brake according to claim 2, **characterized in that** the connecting element (14) is a screw (15), in particular a thread-forming or self-tapping screw (15).

4. Spring-applied brake according to any one of the preceding claims, **characterized in that** the counterpart is a threaded sleeve (16).

5. Spring-applied brake according to claim 4, **characterized in that** the connecting element (14) detachably engages into the threaded sleeve (16).

6. Spring-applied brake according to claim 1, **characterized in that** a bore (23) adjoins the blind hole (17) in the axial extension of the blind hole (17) into which the connecting element (14) engages in a detachable manner.

7. Spring-applied brake according to claim 1 or 2, **characterized in that** the bore (23) has a smaller inner diameter compared to the inner diameter of the blind hole (17).

8. Spring-applied brake according to claim 4, **characterized in that** the threaded sleeve (16) has a portion (24) on the inside which cooperates with the thread-cutting or self-tapping screw (15), which portion extends in the axial direction over a sub-section of the threaded sleeve (16).

9. Spring-applied brake according to any one of the preceding claims 4 to 8, **characterized in that** the threaded sleeve (16) has a radially offset and/or roughened, in particular knurled, region externally on the lateral surface thereof which extends in the axial direction over a sub-section of the threaded sleeve (16).

10. Method for the manufacture of an electromagnetically spring-applied brake (1) according to any one of the preceding claims, **characterized in that**
- the magnet housing (7) is fixed in a holding device,
- the brake disk (2) is arranged on the magnet housing (7) with the armature plate (10) interposed, and
- the counterpart (16) is pressed into the blind hole (17) by means of a press ram (27),
wherein the press ram (27) cooperates with a first portion (30) with the counterpart and with a second portion (31) with the brake disk (2),
wherein the second portion (31) protrudes axially beyond the first portion (30) on the side of the magnet housing, and
wherein the press ram (27) is moved towards the magnet housing (7) until the armature plate (10) stops against the magnet housing (7).

11. Method according to claim 10, **characterized in that** the armature plate (10) is arranged on the magnet housing (7) with the interposition of pressure spring elements (11).

12. Method according to claim 10 or 11, **characterized in that** the radial offset between the first portion (30) and the second portion (31) of the press ram (27) is chosen in accordance with a desired air gap (LS) between the armature plate (10) and the magnet housing (7) in the final assembled state.

13. Method according to any one of the preceding claims 10 to 12, **characterized in that** the flange (13) is screw-fixed to the magnet housing (7) with the interposition of the brake disk (2), the armature plate (10) and the pressure spring elements (11), wherein a screw (15), in particular a thread-cutting or self-tapping screw (15), which is inserted into the counterpart, is used as connecting element (14).

## Revendications

1. Frein à ressort à action électromagnétique, comprenant
- un disque de frein (2) qui peut être disposé sur un arbre de manière à être fixe en rotation mais néanmoins déplaçable axialement,
- un électroaimant (6) comportant un boîtier d'aimant (7) et une bobine (9) logée dans celui-ci,
- une plaque d'armature (10) disposée entre le disque de frein (2) et le boîtier d'aimant (7) de manière à pouvoir être déplacée axialement, et
- une bride (13) qui est disposée de manière solidaire en rotation sur le boîtier d'aimant (7) au moyen d'un élément de liaison (14),
le disque de frein (2) et la plaque d'armature (10) étant disposés entre la bride (13) et le boîtier d'aimant (7),
**caractérisé en ce que** l'élément de liaison (14) s'engage dans une contre-pièce conçue pour correspondre à l'élément de liaison (14), laquelle contre-pièce est enfoncée dans un trou borgne (17) prévu dans le boîtier d'aimant (7), le bord (20) de la contre-pièce tourné vers le boîtier d'aimant (7) étant disposé à distance du fond (26) du trou borgne (17) en laissant un espace libre (25) présentant un volume résiduel.

2. Frein à ressort selon la revendication 1, **caractérisé en ce que** l'élément de liaison (14) comporte un filetage.

3. Frein à ressort selon la revendication 2, **caractérisé en ce que** l'élément de liaison (14) est une vis (15), en particulier une vis autotaraudeuse ou autofiletante (15).

4. Frein à ressort selon l'une quelconque des revendications précédentes, **caractérisé en ce que** la contre-pièce est un manchon fileté (16).

5. Frein à ressort selon la revendication 4, **caractérisé en ce que** l'élément de liaison (14) s'engage de manière amovible dans le manchon fileté (16).

6. Frein à ressort selon la revendication 1, **caractérisé en ce qu'**un alésage (23) est adjacent au trou borgne (17) dans le prolongement axial du trou borgne (17), dans lequel l'élément de liaison (14) s'engage de manière amovible.

7. Frein à ressort selon la revendication 1 ou 2, **caractérisé en ce que** l'alésage (23) a un diamètre intérieur plus petit que le diamètre intérieur du trou borgne (17).

8. Frein à ressort selon la revendication 4, **caractérisé en ce que** le manchon filetée (16) comporte une partie (24) sur la face intérieure qui coopère avec la vis autotaraudeuse ou autofiletante (15), laquelle partie s'étend dans la direction axiale sur une partie du manchon fileté (16).

9. Frein à ressort selon l'une quelconque des revendications 4 à 8 précédentes, **caractérisé en ce que** le manchon fileté (16) présente une zone décalée radialement et/ou rugueuse, en particulier moletée, à l'extérieur sur sa surface latérale, zone qui s'étend dans la direction axiale sur une partie manchon filetée (16).

10. Procédé de fabrication d'un frein à ressort électromagnétique (1) selon l'une quelconque des revendications précédentes, **caractérisé en ce que**
- le boîtier d'aimant (7) est fixé dans un dispositif de maintien,
- le disque de frein (2) est disposé sur le boîtier d'aimant (7) avec la plaque d'armature (10) intercalée, et
- la contre-pièce (16) est enfoncée dans le trou borgne (17) au moyen d'un piston de pression (27),
le piston de pression (27) coopérant par une première partie (30) avec la contre-pièce et par une deuxième partie (31) avec le disque de frein (2), la deuxième partie (31) dépassant axialement de la première partie (30) du côté du boîtier d'aimant et
le piston de pression (27) étant déplacé vers le boîtier d'aimant (7) jusqu'à ce que la plaque d'armature (10) bute contre le boîtier d'aimant (7).

11. Procédé selon la revendication 10, **caractérisé en ce que** la plaque d'armature (10) est disposée sur le boîtier d'aimant (7) avec interposition d'éléments de ressort de pression (11).

12. Procédé selon la revendication 10 ou 11, **caractérisé en ce que** le décalage radial entre la première partie (30) et la deuxième partie (31) du piston de pression (27) est choisi en fonction d'un entrefer souhaité (LS) entre la plaque d'armature (10) et le boîtier d'aimant (7) à l'état final assemblé.

13. Procédé selon l'une quelconque des revendications précédentes 10 à 12, **caractérisé en ce que** la bride (13) est vissée au boîtier d'aimant (7) avec interposition du disque de frein (2), la plaque d'armature (10) et les éléments de ressort de pression (11), dans lequel une vis (15), en particulier une vis autotaraudeuse ou autofiletante (15), qui est insérée dans la contre-pièce, est utilisée comme élément de liaison (14).
